# EUROPÄISCHE PATENTSCHRIFT

(11) **EP 2 472 196 B1**
(45) Veröffentlichungstag und Bekanntmachung des Hinweises auf die Patenterteilung: **29.05.2013**
(21) Anmeldenummer: 10197159.6
(22) Anmeldetag: 28.12.2010
(51) Int. Cl.: F24J 2/54

(54) **Solarrinne**
Solar trough collector
Collecteur solaire cylindro-parabolique

(43) Veröffentlichungstag der Anmeldung: 04.07.2012
(73) Patentinhaber: HAWE Hydraulik SE, 81673 München (DE)
(72) Erfinder: Neumair, Georg, 85402, Thalhausen (DE)
(74) Vertreter: Grünecker, Kinkeldey, Stockmair & Schwanhäusser

(56) Entgegenhaltungen:
- EP-A1- 1 985 867
- EP-A1- 2 226 592
- WO-A1-2009/087257

## Beschreibung

Die Erfindung betrifft eine Solarrinne der im Oberbegriff des Patentanspruchs 1 angegebenen Art.

Bei der aus EP 2 226 592 A bekannten Solarrinne werden die Wegeventile durch Magneten umgestellt und wird jegliche Verstellbewegung der Solarrinne durch Ein- und Ausschalten der drehrichtungsumkehrbaren Einkreis- oder Zweikreispumpe gesteuert. Da bei einem Stromausfall oder einer Stromabschaltung die Zirkulation eines Wärmeträgers im Absorberrohr der Solarrinne nicht mehr gewährleistet ist, und somit die Gefahr eines Schadens akut wird, muss die Solarrinne über einen Notfallschritt aus der Sonne verdreht werden, üblicherweise über ca. 3° Richtung Osten. Da sämtliche Verstellbewegungen der Solarrinne über die Pume gesteuert werden und auch Ventilbetätigungsmagneten in der Steuerung Steuerstrom benötigen, ist eine teure und leistungsfähige Notstromversorgung erforderlich. Bei einem Solarkraftwerk mit einer Vielzahl Solarrinnen und einer Leistung von etwa 250 MW erfordert allein die Notstromversorgung eine Leistung von etwa 3 MW

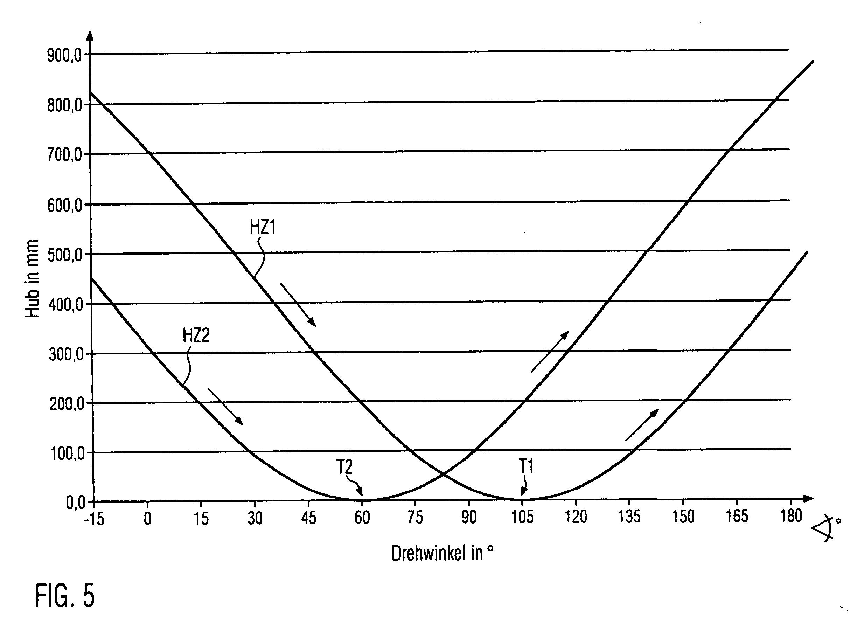

Die EP-Anmeldung mit dem Aktenzeichen 10 014 839 mit älterem Zeitrang schlägt für eine magnetbetätigte Wegeventile für die Hydraulikzylinder aufweisende Steuerung zur Solarrinnen-verstellung vor, die Wegeventile in der jeweils über einen Magneten durch kurzzeitige Bestromung eingestellten Schaltstellung zu verrasten. Außerdem wird vorgeschlagen (Fig. 5), bei Stromausfall oder Stromabschaltung ohne Notstromversorgung einen Notfallschritt-Ablauf zu steuern, der automatisch ohne Nutzen einer elektrischen Hilfssteuerung mit zum Beispiel Kondensatoren, nur aus einem Druckspeicher hydraulisch zu steuern.

Der Erfindung liegt die Aufgabe zugrunde, eine Solarrinne der eingangs genannten Art anzugeben, die mit verbesserter Energiebilanz und erhöhter Betriebssicherheit verstellbar ist.

Die gestellte Aufgabe wird mit den Merkmalen des Patentanspruchs 1 gelöst.

Die mechanische Abgreifvorrichtung und die mechanisch betätigbaren Wegeventile zur Richtungssteuerung der Hydraulikzylinder funktionieren auch dann sicher, wenn bei einem Stromausfall oder einer Stromabschaltung einer der Hydraulikzylinder gerade in den Bereich seines Wirktotpunkts eintritt oder diesen verlässt oder sich in diesem befindet und/oder während der Ausführung eines Nottallschritts über zum Beispiel 3° aus dem Wirktotpunkt herausfährt oder in diesen hineinfährt; weil das jeweilige Wegeventil von Ausfahren auf Einfahren des Hydraulikzylinders oder umgekehrt in Abhängigkeit von der abgegriffenen Position der Solarrinne umgesteuert wird. Bei magnetbetätigten Wegeventilen würde nämlich das Betroffene wegen des Stromausfalls nicht umgesteuert werden, so dass dann der betroffene Hydraulikzylinder gegebenenfalls gegen den anderen Hydraulikzylinder wirken könnte. Die Mechanik der Abgreifvorrichtung zur Betätigung der Wegeventile arbeitet stets gleich zuverlässig, unabhängig davon, ob Strom verfügbar ist, oder nicht und stellt die ordnungsgemäße Richtungssteuerung der Hydraulikzylinder in jeder Betriebssituation der Solarrinne sicher. Hinzu kommt der Vorteil, dass der elektronische Teil der Steuerung einfacher und damit betriebssicher gestaltet werden kann, da die Wegeventile und die Abgreifvorrichtung autark mechanisch und zwangsweise präzise funktionieren.

Bei einer zweckmäßigen Ausführungsform werden die von der Abgreifvorrichtung mechanisch betätigbaren Wegeventile in Kombination mit einer Steuerung benutzt, die wenigstens einer von der Pumpe aufgeladenen Druckspeicher zumindest zum bei Ausführen eines Notfallschritts nach Osten zugeordnet ist. Der Nottallschritt wird ohne Einsatz seiner elektrischen Hilfssteuerung oder eines elektrischen Schaltgliedes jeweils nur über die magnetbetätigten aber stromlosen Ventile und die mechanisch betätigten Wegeventile vollständig automatisch gesteuert, so dass eine Notstromversorgung entbehrlich ist.

Günstig sind die mechanisch betätigbaren Wegeventile 4/2-Wegeventile mit einem über die Abgreifvorrichtung betätigbaren Umstellstößel oder -hebel. Diese Ausbildung der Wegeventile ist über viele Schaltzyklen standfest und betriebssicher.

Besonders zweckmäßig ist jedes 4/2-Wegeventil ein Schieberventil mit positiver Überdeckung zwischen beiden Schaltstellungen. Solche Schieberventile sind über lange Standzeiten betriebssicher, leichtgängig betätigbar, ermöglichen kurze Schaltzeiten und relativ große Durchflussquerschnitte. Die positive Überdeckung zwischen den Schaltstellungen ist optional dann zweckmäßig, wenn die Wegeventile beider Hydraulikzylinder gemeinsam an die Arbeitsleitungen angeschlossen sind, um zu vermeiden, dass Druck für ein Wegeventil über das andere, gerade umsteuernde Wegeventil abgebaut wird. Der Nachteil leckagebehafteter Schieberventile spielt keine Rolle, da die Hydraulikzylinder ohnedies wie üblich über leckagefrei absperrende Lasthalteventil-Einrichtungen abgesichert sind.

Bei einer zweckmäßigen Ausführungsform greift die Abgreifvorrichtung zum Generieren eines Betätigungshubs des jeweiligen Wegeventils die Drehbewegung der Nabe der Solarrinne relativ zu einem stationären Teil eines Antriebspylonen ab, auf welchem die Solarrinne abgestützt ist. Die Umsteuerung der Wegeventile ist nämlich während eines Sonnentages bei der Nachführung der Solarrinne nach dem sich von Osten nach Westen verlagernden Sonnenstand ohnedies nur jeweils einmal erforderlich, wenn der jeweilige Hydraulikzylinder von Einfahren auf Ausfahren umzustellen ist, und gegebenenfalls bei der Rückstellung in die Morgenposition ein weiteres Mal. Bei der Ausführung eines Notfallschritts kann es ebenfalls erforderlich werden, das Wegeventil umzusteuern, falls der betroffene Hydraulikzylinder gerade in oder bei seinem Totpunktbereich ist. Bei einem Gesamtverstellbereich von etwa 200° entsteht eine relativ große relative Drehbewegung der Nabe, so dass die Betätigungspunkte zum Generieren des jeweiligen Betätigungshubs präzise vorherbestimmbar und abgreifbar sind.

Bei einer anderen Ausführungsform greift die Abgreifvorrichtung die Schwenkbewegung einer Kolbenstange des Hydraulikzylinders relativ zu deren Anlenkung an der Nabe ab. Die hier zum Abgreifen nutzbare Bewegungs ist zwar kleiner als der Drehhub der Nabe, jedoch ausreichend groß, um den jeweiligen Umsteuerpunkt exakt vorher bestimmt abzugreifen. Außerdem kann die Bewegung zum Abgreifen einfach mechanisch ins Größere übersetzt werden.

Bei einer weiteren, zweckmäßigen Ausführungsform greift die Abgreifvorrichtung die Schwenkbewegung des Hydraulikzylinders relativ zu dessen Abstützung ab. Diese relative Schwenkbewegung hat insgesamt ein relativ kleines Ausmaß, lässt sich jedoch dennoch zum präzisen Generieren des Betätigungshubs für das Wegeventil nutzen, oder durch einfache mechanische Hilfseinrichtungen ins Größere übersetzen. In jedem Fall wird die von den Hydraulikzylindern für die Solarrinne erzeugte Stellkraft zum Generieren der Betätigungskraft für das jeweilige Wegeventil eingesetzt.

Vorteilhaft ist für jedes Wegeventil eine Abgreifvorrichtung vorgesehen, oder teilen sich die beiden Wegeventile eine gemeinsame Abgreifvorrichtung. Im letzteren Fall ist der bauliche Aufwand minimal.

In einer konkreten Ausführungsform weist die Abgreifvorrichtung wenigstens eine Nockenfläche mit wenigstens einem Nockenübergang auf. Der Umstellstößel oder -hebel des Wegeventils liegt an der Nockenfläche an. Vorzugsweise wird er durch Federkraft angelegt, und zur Verschleißminderung über eine drehbare Abtastrolle. Als weitere Alternative könnte die Abgreifvorrichtung die Hubwegposition und/oder Hubbewegung der Kolbenstange des jeweiligen Hydraulikzylinders abgreifen und daraus den Betätigungshub und die Betätigungskraft für das Wegeventil generieren.

Um den Betätigungshub der Abgreifvorrichtung auf möglichst kurzem Weg und unverfälscht übertragen zu können, ist es zweckmäßig, die Wegeventile an den Hydraulikzylindern und nahe der Abgreifvorrichtung anzuordnen, obwohl es auch möglich wäre, die Wegeventile direkt bei der Abgreifvorrichtung anzuordnen und über Schlauchleitungen an die Hydraulikzylinder anzuschließen.

Bei einer zweckmäßigen Ausführungsform der Steuerung ist in einer von der Pumpe gespeisten Druckleitung ein 2/2-Wege-Magnetsitzventil stromauf eines 4/2-Wege-Magnetventils zur Solarrinnen-Verstellrichtungswahl angeordnet. Das 2/2-Wege-Magnetsitzventil ist bestromt in Sperrstellung und unbestromt in einer gedrosselten Durchgangsstellung. Das 4/2-Wege-Magnetventil nimmt hingegen unbestromt eine Schaltstellung entsprechend einer Solarrinnen-Verstellung nach Osten ein. Zum Ausführungen eines Notfallschritts bei Stromausfall wird so auch ohne Notstromversorgung auf mechanischem Weg die Voraussetzung sicher eingestellt, den Notfallschritt aus dem Druckspeicher steuern zu können, unabhängig davon, wie die Wegeventile an den Hydraulikzylindern gerade eingestellt sind, da diese unabhängig von einer Stromversorgung nur nach den mechanischen Gegebenheiten der Solarrinnenverstellung orientiert sind. Dieses Konzept schafft die günstige Voraussetzung, den Notfallschritt bei Stromausfall oder Stromabschaltung ohne Verwendung einer elektrischen Hilfssteuerung automatisch durchzuführen. Die gedrosselte Durchgangsstellung des 2/2-Wege-Magnetsitzventils ist zweckmäßig zur Steuerung zumindest des Notfallschritts mit wählbarer Geschwindigkeit aus dem Druckspeicher, der im Regelfall mit maximalem Systemdruck aufgeladen ist.

Bei einer anderen Ausführungsform kann in der von der Pumpe gespeisten Druckleitung parallel zum 2/2-Wege-Magnetsitzventil ein weiteres, ähnliches 2/2-Wege-Magnetsitzventil angeordnet sein, das bestromt eine Sperrstellung und unbestromt eine im Wesentlichen ungedrosselte Durchgangsstellung einnimmt. Damit dieses, gegebenenfalls häufig zu schaltende, weitere 2/2-Wege-Magnetsitzventil mit einem relativ schwachen Schaltmagneten auskommt und große Strömungsquerschnitte freigeben kann, ist es zweckmäßig, in diesem eine Druckvorsteuerung in Schaltrichtung zur Sperrstellung vorzusehen.

Bei einer zweckmäßigen Ausführungsform ist die Steuerung zumindest zum Ausführen der Nachführschritte und des Notfallschritts bei ausgeschalteter Pumpe aus dem Druckspeicher und jeweils über das 2/2-Wege-Magnetsitzventil ausgelegt, und ist zum Ein- und Ausschalten der Pumpe zumindest während eines Speicherladebetriebs ein Schaltrelais für den elektromotorischen Antrieb der Pumpe vorgesehen. Das Schaltrelais braucht nur relativ selten betätigt zu werden, während der Magnet des 2/2-Wege-Magnetsitzventils häufig geschaltet wird. Die Kapazität des Druckspeichers reicht ggf. nicht nur zum sicheren Durchführen eines Notfallschritts nach Osten auch bei einwirkenden Windkräften aus, sondern auch beispielsweise für eine bestimmte Anzahl Nachführschritte ohne Pumpenunterstützung. Die Pumpe braucht somit nur relativ selten eingeschaltet zu werden.

Bei einer anderen Ausführungsform der Steuerung dient diese zum Ausführen zumindest der Nachführschritte und zum Aufladen des Druckspeichers durch Ein- und Ausschalten der Pumpe über ein Schaltrelais des elektromotorischen Antriebs der Pumpe. Nur der Notfallschritt wird ohne Einschalten der Pumpe (Stromausfall oder -abschaltung) aus dem Druckspeicher gesteuert. Hier sollte das Schaltrelais für entsprechend belastbar sein, da es häufig benutzt wird. Hingegen gibt es dann für das 2/2-Wege-Magnetsitzventil weniger Schaltzyklen.

Bei einer zweckmäßigen Ausführungsform ist in der Druckleitung ein zur Pumpe sperrendes Rückschlagventil angeordnet, um den aufgeladenen Druckspeicher bei ausgeschalteter Pumpe abzusichern.

Schließlich kann es zweckmäßig sein, ausgangs des 2/2-Wege-Magnetsitzventils zum Steuern zumindest des Notfallschritts aus dem Druckspeicher eine Blende oder ein Zweiwegestromregelventil anzuordnen. Auf diese Weise lässt sich der Notfallschritt mit definierter Geschwindigkeit ausführen, auch dann, wenn die ohnedies relativ gewichtsausgeglichen verstellbare Solarrinne in einer Betriebssituation ohne starke Windkräfte ist, für welche Betriebssituation der Druckspeicher-Ladedruck ausgelegt sein muss.

Anhand der Zeichnung werden Ausführungsformen des Erfindungsgegenstandes erläutert. Es zeigen:
- Fig. 1: eine schematische Seitenansicht einer Solarrinne,
- Fig. 2, 3 und 4: vergrößerte Seitenansichten der Solarrinne beispielsweise von Fig. 1 in unterschiedlichen Betriebsphasen, und mit unterschiedlichen mechanischen Abgreifvorrichtungen,
- Fig. 5: ein Diagramm der Bewegungshübe der Hydraulikzylinder der Solarrinne in Millimeter über einem Verstellbereich in Winkelgraden,
- Fig. 6: eine Seitenansicht eines Details zur Verdeutlichung eines mechanisch betätigbaren Wegeventils und einer Ausführung der Abgreifvorrichtung,
- Fig. 7: ein Blockschaltbild einer ersten Ausführungsform einer Steuerung einer elektrohydraulischen Verstellvorrichtung der Solarrinne, und
- Fig. 8: eine andere Ausführungsform einer Steuervorrichtung in Form eines Blockschaltbilds.

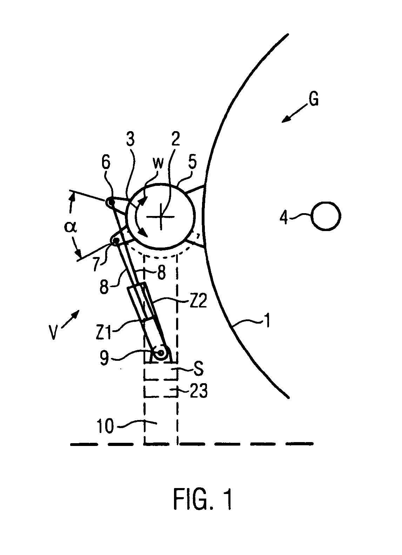

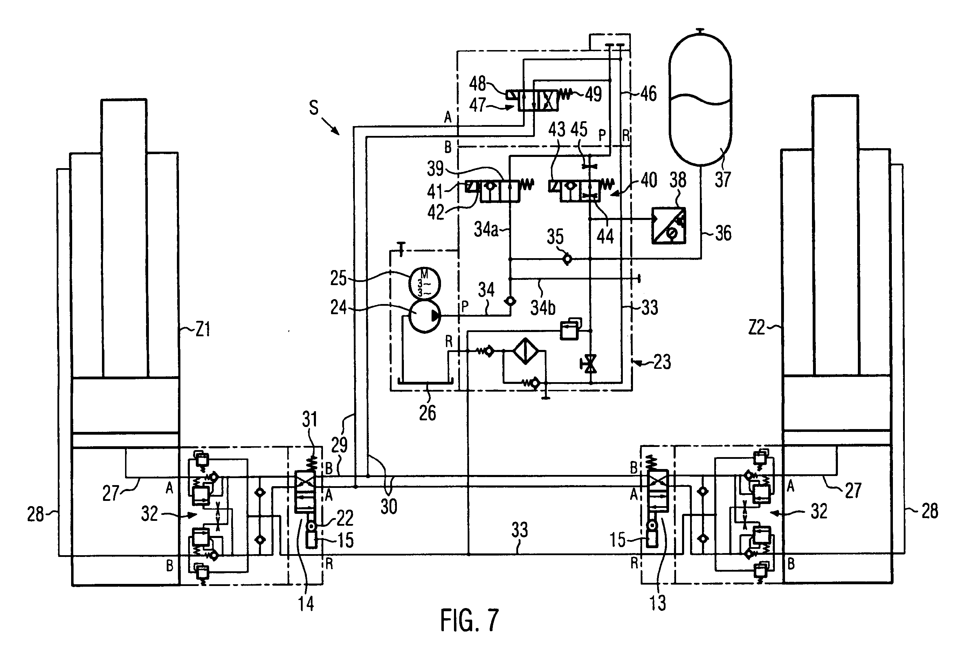

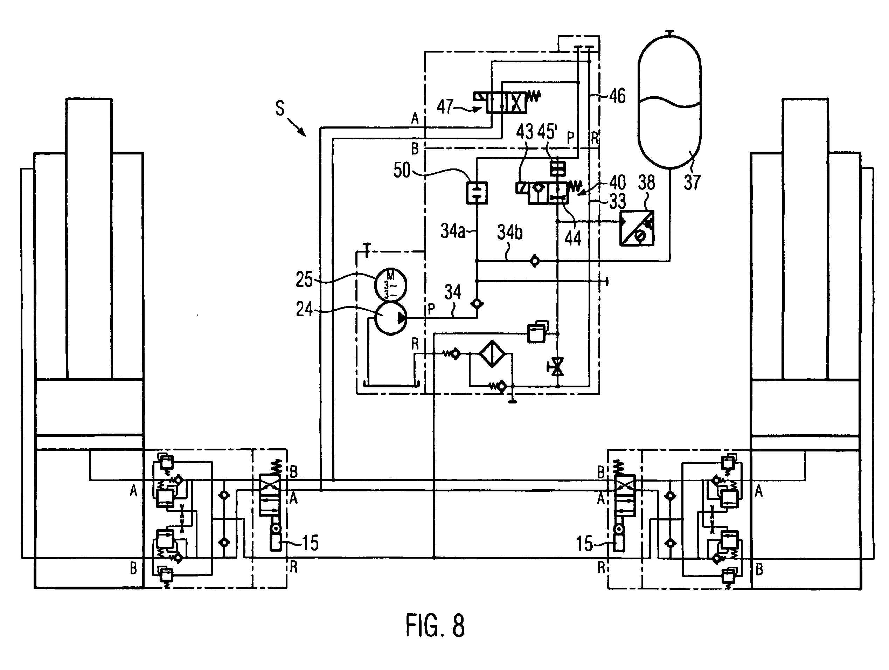

Eine Solarrinne G weist in Fig. 1 einen Parabol-Reflektor 1 auf, in dessen Brennpunktbereich wenigstens ein Absorberrohr 4 positioniert ist, in welchem ein Wärmeträger zirkuliert. In einem Solarkraftwerk ist eine Vielzahl solcher bis beispielsweise 300 m langer Solarrinnen G auf dem Boden aufgestellt. Die Solarrinne G an Nabe 5 ist mit einer elektrohydraulischen Verstellvorrichtung V durch einer Steuerung S um eine Drehachse 2 verdrehbar. Die Drehachse 2 hat beispielsweise eine Nord/Süd-Ausrichtung. Die Solarrinne G wird dem Stand der Sonne bei deren Bewegung von Osten nach Westen in Schritten nachgeführt, beispielsweise alle 20 Sekunden mit einem Nachführschritt während weniger Sekunden (in Fig. 1 im Uhrzeigersinn). Fig. 1 zeigt beispielsweise die Abendposition der Solarrinne G mit Orientierung nach Westen W. Um die Solarrinne G während der Nacht in eine Morgenposition mit Orientierung nach Osten O oder in wenigstens eine nicht gezeigte Stauposition oder im Falle eines Stromausfalls oder Stromabschaltung zum Schutz des Absorberrohrs 4 aus der Sonne über einen Notfallschritt nach Osten O zu drehen, sind zwei doppelt wirkende Hydraulikzylinder Z1, Z2 (zum Beispiel Differenzialzylinder) an der die Drehachse 2 definierenden Nabe 5 mit einem gegenseitigen Winkelversatz α (zum Bespiel etwa 30°) in Anlenkungen 6, 7 mit ihren Kolbenstangen 8 angelenkt. Die Hydraulikzylinder Z1, Z2 stützen sich in der gezeigten Ausführungsform in einem gemeinsamen stationären Widerlager 9 eines Antriebspylons 10 der Solarrinne G ab. Die elektrohydraulische Verstellvorrichtung V enthält die Steuervorrichtung S beispielsweise entsprechend den Fig. 7 und 8. Die Steuerung S kann kombiniert mit einem Motorpumpenaggregat 23 im Antriebspylon 10 untergebracht sein, oder gegebenenfalls auch neben dem Antriebspylonen 10.

Die Verstellrichtungen nach Westen oder Osten W, O sind in Fig. 1 durch einen Doppelpfeil 3 angedeutet. Insgesamt lässt sich die Solarrinne G über beispielsweise annähernd 200° verstellen. Bei schlechtem Wetter und/oder starkem Wind muss die Solarrinne G innerhalb einer vorgeschriebenen Zeitdauer, zum Beispiel 10 Minuten, in wenigstens eine vorbestimmte Wind-Schutzposition (Stauposition) gestellt werden.

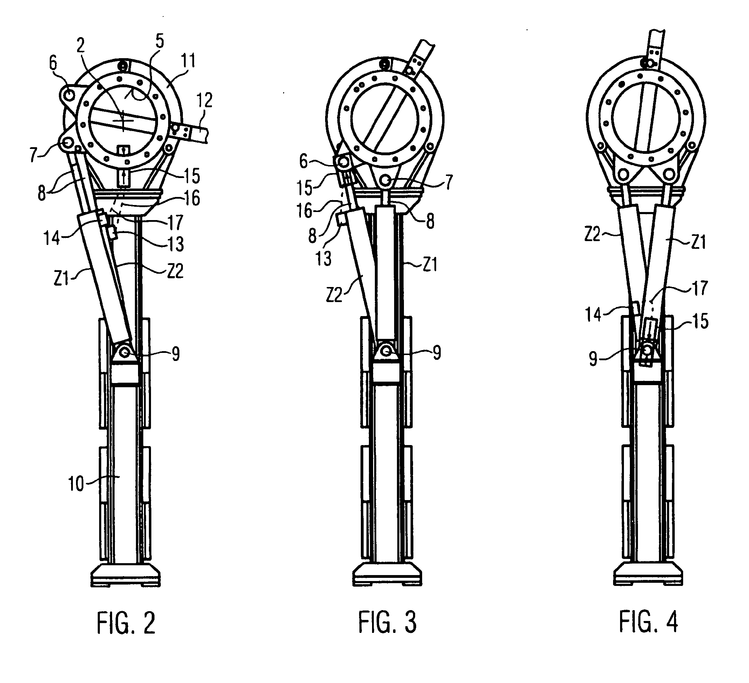

Die Fig. 2, 3 und 4 zeigen unterschiedliche Betriebspositionen der Solarrinne G beispielsweise von Fig. 1. Die Nabe 5 ist in einem stationären Teil 11 des Antriebspylonen 10 drehbar und über einen Ausleger 12 mit der Solarrinne G verbunden. Den beiden Hydraulikzylindern Z1, Z2 sind zur Richtungssteuerung Wegeventile 13, 14 zugeordnet, die beispielsweise an den Hydraulikzylindern Z1, Z2 oder an geeigneter Stelle am Antriebspylonen 10 montiert sind.

Die Wegeventile 13, 14 in Fig. 2 sind mechanisch betätigbar, und zwar über bewegungsübertragende Verbindungen 16, 17 von einer hier gemeinsamen mechanischen Abgreifvorrichtung 15 für die relative Drehbewegung der Nabe 5 im stationären Teil 11. In der in Fig. 2 gezeigten Betriebsposition werden, abhängig davon, ob die Nabe 5 weiter im Uhrzeigersinn oder entgegen dem Uhrzeigersinn verstellt wird, beide Hydraulikzylinder Z1, Z2 über die Wegeventile 13, 14 gleichläufig gesteuert.

Aufgrund des Versatzes von etwa 30° zwischen den Anlenkungpunkten 6, 7 an der Nabe 5 werden abhängig vom Stand der Sonne beide Hydraulikzylinder Z2, Z1 gleichläufig ausgefahren oder eingefahren, oder gleichzeitig gegenläufig betätigt, wobei jeder Hydraulikzylinder Z1, Z2, innerhalb des Verstellbereichs einmal einen Totpunktbereich überfährt, der in Fig. 3 beim Hydraulikzylinder Z1 angedeutet ist. Die Kolbenstange 8 ist dann zumindest im Wesentlichen auf die Drehachse 2 ausgerichtet. Die beim Durchfahren des Totpunktbereichs erforderliche Umsteuerung des jeweiligen Hydraulikzylinders Z1 wird über die Wegeventile 13 bzw. 14 und die Abgreifvorrichtung 15 bewirkt.

In Fig. 3 (angenommene Verstellrichtung der Solarrinne G entgegen dem Uhrzeigersinn) befindet sich der Hydraulikzylinder Z1 im Totpunktbereich, während der Hydraulikzylinder Z2 weiterhin eingefahren wird. In Fig. 3 greift die Abgreifvorrichtung 15 die relative Schwenkbewegung zwischen der Kolbenstange 8 und den Anlenkpunkt 6 ab, um über die bewegungsübertragende mechanische Verbindung 16 einen Betätigungshub auf das Wegeventil 13 zu übertragen, sobald das Wegeventil 13 umzusteuern ist. Es könnte eine gemeinsame, entsprechend konzipierte Abgreifvorrichtung 15 für beide Wegeventile 13, 14 vorgesehen sein, oder eine separate Abgreifvorrichtung 15 für jeden Hydraulikzylinder Z1, Z2 und jedes Wegeventil 13, 14.

In der Ausführungsform in Fig. 4 fährt unter der Annahme einer Verstellung entgegen dem Uhrzeigersinn der Hydraulikzylinder Z2 ein, während der Hydraulikzylinder Z1 ausfährt. Die Abgreifvorrichtung 15 greift hier die relative Schwenkverstellung des Hydraulikzylinders Z1 in der stationären Abstützung 9 ab und betätigt das Wegeventil 14 über die bewegungsübertragende mechanische Verbindung 17. Auch in Fig. 4 könnte eine gemeinsame Abgreifvorrichtung 15 für beide Hydraulikzylinder Z1, Z2 vorgesehen sein, oder könnten zwei separate Abgreifvorrichtungen 15 vorgesehen werden.

Als weitere, nicht gezeigte Alternative könnte die Abgreifvorrichtung die Hubwegposition und/oder den Hubweg der jeweiligen Kolbenstange 8 abgreifen und daraus den Betätigungshub für das jeweilige Wegeventil generieren, wenn der Hydraulikzylinder umzusteuern ist.

Die einzelnen, anhand der Fig. 2 bis 4 erläuterten Alternativen zur Anordnung und Ausbildung der Abgreifvorrichtungen 15 könnten auch wahlweise kombiniert werden.

Das Diagramm in Fig. 5 verdeutlicht die Hubbewegungen der Hydraulikzylinder Z1, Z2 anhand Kurven HZ1, HZ2, wobei auf der vertikalen Achse der Hubweg in Millimeter und auf der horizontalen Achse der Drehwinkel der Solarrinne G um die Drehachse 2 in Winkelgraden, beispielsweise von minus 15° bis plus 190°, zunehmend nach rechts, aufgetragen ist. T2 repräsentiert den Totpunktbereich des Hydraulikzylinders Z2 in der Kurve HZ2, während T1 den um etwa 45° gegenüber T2 versetzten Totpunktbereich des Hydraulikzylinders Z1 in der Kurve HZ1 repräsentiert. Die abfallenden Pfeile verdeutlichen das Einfahren, die ansteigenden Pfeile hingegen das Ausfahren der Kolbenstangen 8 der Hydraulikzylinder Z1, Z2. Im Diagramm zeigt sich, dass zunächst bis zum Erreichen des Totpunktbereichs T2 beide Hydraulikzylinder gleichläufig einfahren, nach Überfahren des Totpunktbereichs T2 der Hydraulikzylinder Z2 ausfährt, während der Hydraulikzylinder Z1 noch einfährt, und dass nach Überfahren auch des Totpunktbereichs T1 beide Hydraulikzylinder Z1, Z2 gleichläufig ausfahren. Im jeweiligen Totpunktbereich T1, T2, oder kurz vorher oder kurz nachher, müssen die Wegeventile 13 bzw. 14 umgesteuert werden, damit die Hydraulikzylinder Z1, Z2 nicht gegeneinander arbeiten.

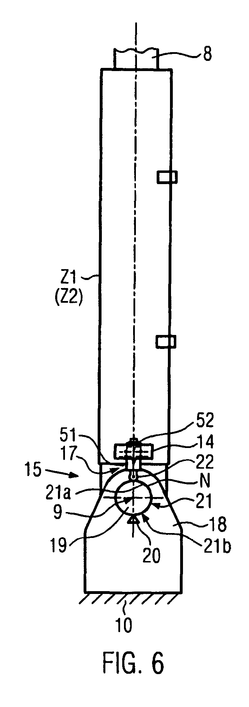

Falls ein Notfallschritt (zum Beispiel 3° nach Osten) auszuführen ist, und einer der Hydraulikzylinder Z1, Z2 gerade im Begriff ist, seinen Totpunktbereich T1 oder T2 zu erreichen oder zu verlassen oder sich darin befindet, ist es über den Notfallschritt gegebenenfalls ebenfalls erforderlich, ein betroffenes Wegeventil 13 oder 14 umzustellen. Dafür trägt die jeweilige Abgreifvorrichtung 15 auf mechanischem Wege Sorge, wie beispielsweise anhand Fig. 6 im Detail erläutert wird.

Fig. 6 zeigt ein Konzept ähnlich dem in Fig. 4 angedeuteten. An dem Hydraulikzylinder Z1 (wie gegebenenfalls auch am Hydraulikzylinder Z2) ism an der Kolbenstange 8 abgewandten Zylinder-Ende außenseitig das Wegeventil 14 montiert und an die nicht gezeigten Kammern des Hydraulikzylinders Z1 angeschlossen. Der Hydraulikzylinder Z1 stützt sich auf einem Bolzen 19 ab, der stationär (bei 20 angedeutet) in einem Lagerbock 18 des Antriebspylonen 10 festgelegt ist. Der Hydraulikzylinder Z1 ist in diesem Fall auf dem Bolzen 19 verschwenkbar. Alternativ könnte sich der Bolzen 19 zusammen mit dem Hydraulikzylinder Z1 im Lagerbock 18 drehen. Dann wäre das Konzept der Abgreifvorrichtung 15 entsprechend umzustellen.

Im gezeigten Beispiel der Fig. 6 ist auf dem stationären Bolzen 19 ein Nocken 21 angeordnet, der hier beispielsweise zwei Nockenflächen 21 a und 21 b mit wenigstens einem in seiner Position vorbestimmten Nockenübergang N aufweist. Auf dem Nocken 21 liegt ein Umstellstößel 22 (oder ein Umstell-Hebel, nicht gezeigt) unter Federkraft auf, der das Wegeventil 14 zwischen seinen Schaltstellungen umsteuert, wenn der Nockenübergang N in Aufwärtsrichtung oder Abwärtsrichtung überfahren wird. Zweckmäßig trägt der Umstellstößel 22 eine Rolle 51 als Nockenfolgeglied, und wird diese durch eine Feder 52 (im oder am Wegeventil 14(gegen den Nocken 21 beaufschlagt. Die Position des Nockenübergangs N ist auf den Totpunktbereich T1 (Fig. 5) des Zylinders Z1 abgestimmt.

Die in Fig. 7 gezeigte Steuerung S der elektrohydraulischen Verstellvorrichtung V weist die Wegeventile 13, 14, wie erwähnt, an den Hydraulikzylindern Z1, Z2 auf, zweckmäßig in dort angebauten Blöcken, in welchen auch jeweils eine Lasthalteventilanordnung 32 enthalten ist, zu der Arbeitsleitungen 28, 27 aus den beiden Kammern jedes Hydraulikzylinders Z1, Z2 führen. Jedes Wegeventil 13, 14 ist ein 4/2-Wege-Schieberventil, dessen Schieber, vorzugsweise, mit positiver Überdeckung zwischen den beiden Schaltstellungen durch den Umstellstößel 22 gegen die Kraft einer Rückstellfeder 31 verstellbar ist. Die Rückstellfeder 31 könnte gleichzeitig die Feder 52 in Fig. 6 sein. Die beiden Wegeventile 13, 14 sind gemeinsam an Arbeitsleitungen 29, 30 zu einem 4/2-Wege-Magnetventil 47 angeschlossen (zum Beispiel ein Schieberventil) dessen Betätigungsmagnet 48 gegen eine Rückstellfeder 49 arbeitet, und das zur Solarrinnen-Verstellrichtungs-Wahl dient (entweder nach Osten oder nach Westen). Bei unbestromtem Magneten 48 nimmt das 4/2-Wege-Magnetventil 47 die gezeigte Schaltstellung ein, die einer Verstellrichtung nach Osten entspricht, wie sie beispielsweise zum Ausführen eines Notfallschritts gebraucht wird. Zum Ausführen von Nachführschritten wird der Magnet 48 jeweils bestromt oder ist er ohnedies permanent bestromt.

An das 4/2-Wege-Magnetventil 47 sind eine Druckleitung 46 und eine Tankleitung 33 angeschlossen. Die Tankleitung 33 führt auch zu der jeweiligen Lasthalteventilanordnung 32 und endet in einem Tank 26 des Motorpumpenaggregats 23 endet. Das Motorpumpenaggregat 23 enthält die über einen Elektromotor 25 elektromotorisch antreibbare Pumpe 24 , wobei ein nicht gezeigtes Schaltrelais zum Einschalten und Ausschalten des Elektromotors 25 vorgesehen ist. Von der Pumpe 24 führt eine Druckleitung 34 über einen Zweig 34a zu einem 2/2-Wege-Magnetsitzventil 39, vorzugsweise mit Druckvorsteuerung 42 in Richtung zu einer Absperrstellung, wobei dessen Magnet 41 bestromt gegen die Kraft einer Rückstellfeder die Absperrstellung einstellt. Bei stromlosem Magneten 41 liegt die gezeigte, im Wesentlichen ungedrosselte, Durchgangsstellung vor.

An einen weiteren Zweig 34b der Druckleitung 34 ist stromab eines Rückschlagventils 35 über eine Leitung 36 ein Druckspeicher 37 angeschlossen. Der Zweig 34b führt auch zu einem 2/2-Wege-Magnetsitzventil 40 mit einem Magneten 43, (stromlos über eine Rückstellfeder gedrosselte Durchgangsstellung - Drossel 44 -, bestromt Absperrstellung). Stromab des 2/2-Wege-Magnetsitzventils 40 kann eine Blende 45 angeordnet sein. Von den beiden 2/2-Wege-Magnetsitzventilen 39, 40 führt die gemeinsame Druckleitung 46 zu dem 4/2-Wege-Magnetventil 47 Ferner ist eine Speicherladeschaltung vorgesehen, die in der Steuerung S einen an den Zweig 34b angeschlossenen Drucksensor 38 enthält.

Die in Fig. 7 gezeigte Steuerung S ist so ausgebildet, dass jeglicher Verstellschritt der Solarrinne G, ausgenommen ein nur aus dem Druckspeicher 37 gesteuertes Notfallschritt Richtung Osten, durch Ein- und Ausschalten der Pumpe 24 über das Schaltrelais gesteuert wird, wobei die Dauer eines Nachführschritts durch den Magneten 41 begrenzt werden kann. Der Magnet 43 ist zum Beispiel permanent bestromt. Bei Stromausfall wird die Kapazität des Druckspeichers 37 für einen Notfallschritt genutzt.

Der Magnet 48 wird zum Durchführen von Nachführschritten oder permanent bestromt, um über die Hydraulikzylinder Z1, Z2 die Solarrinne G in Richtung Westen zu verstellen.

Tritt ein Stromausfall oder eine Stromabschaltung ein, dann steht die Pumpe 24, sind die stromlosen 2/2-Wege-Magnetsitzventile 39 und 40 in ihren Durchgangsstellungen, und steht das stromlose 4/2-Wege-Magnetventil 47 in einer Schaltstellung für eine Verstellung der Solarrinne G in Richtung Osten. Dann wird der Notfallschritt aus dem Druckspeicher 37 ausgeführt.

Zum Verstellen der Solarrinne in eine Wind-Schutzposition und/oder eine Stauposition und/oder zum Rückführen zur Morgenposition wird die Pumpe 24 permanent eingeschaltet, werden gegebenenfalls beide Magneten 41, 43 stromlos geschaltet, und wird der Magnet 48 entweder bestromt oder unbestromt belassen, abhängig davon, in welche Verstellrichtung die Solarrinne G zu verdrehen ist.

Die Ausführung der Steuerung S in Fig. 8 unterscheidet sich von der der Fig. 7 dadurch, dass die Steuerung S so ausgelegt ist, dass nicht nur ein Notfallschritt sondern auch, im Regelfall, alle Nachführschritte aus dem Druckspeicher 37 gesteuert werden, und die Pumpe 24 allenfalls zum Verstellen in die Wind-Schutzposition oder Stauposition oder zum Rückführen in die Morgenposition eingeschaltet wird, und darüber hinaus jeweils im Speicherladebetrieb geführt über den Drucksensor 38 den Druckspeicher 37 auf einen vorbestimmten Maximaldruck auflädt. Das Schaltrelais der Pumpe 24 braucht hier nur seltene betätigt zu werden, hingegen muss der Magnet 43 des 2/2-Wege-Magnetsitzventils 40 sehr häufig geschaltet werden.

Um den gleichen Ventilblock mit vorgesehenen Kanälen (zum Beispiel dem Zweig 34a) zur Druckleitung 46 nutzen zu können, wie in Fig. 7, wird in Fig. 8 der Zweig 34a durch eine Absperrschraube 50 blockiert, oder wird (alternativ und nicht gezeigt) der Zweig 34a weggelassen. Als weitere Alternative ist in Fig. 8 an Stelle der in Fig. 7 gezeigten Blende 45 ein Zweiwegestromregelventil 45' ausgangs des 2/2-Wege-Magnetsitzventils 40 vorgesehen, das eine Geschwindigkeitsbegrenzung bei der Ausführung zumindest eines Nottallschritts unabhängig von der Last an der Solarrinne regelt.

Der weitere Aufbau der Steuerung S in Fig. 8 und ihre Funktion entsprechen weitgehend denen von Fig. 7. Die Kapazität des Druckspeichers 37 wird zumindest in Fig. 8 zweckmäßig so gewählt, dass aus dem Druckspeicher 37 eine vorbestimmte Anzahl Nachführschritte steuerbar ist. ohne die Pumpe einschalten zu müssen. In Fig. 7 könnte der Druckspeicher 37 mit geringerer Kapazität ausgelegt werden, da er ohnedies nur zum Ausführen jeweils eines Notfallschritts Richtung Osten eingesetzt wird.

## Patentansprüche

1. Solarrinne (G) mit einer elektrohydraulischen Verstellvorrichtung (V) und einer Steuerung (S), wobei die Solarrinne (G) an einer um eine Drehachse (2) drehbaren Nabe (5) angebracht ist, an der mit gegenseitigem Versatz zwei doppelt wirkende Hydraulikzylinder (Z1, Z2) angelenkt sind, die an wenigstens einem stationären Widerlager (9) schwenkbar abgestützt und jeweils über ein Wegeventil (13, 14) richtungssteuerbar sind, wobei die Steuerung (S) als Druckquelle eine elektromotorisch antreibbare Pumpe (24) und zumindest gegen Federkraft umstellbare Ventile (39, 40, 47) zum schrittweisen Verstellen der Solarrinne (G) zur Sonnenstands-Nachführung nach Westen, bei Stromausfall oder Stromabschaltung in einem Notfallschritt nach Osten, zum Überführen aus einer Abendposition in eine Morgenposition, sowie zum durchgehenden Einstellen wenigstens einer vorbestimmten Windschutz- und/oder Stau-Position enthält, **dadurch gekennzeichnet, dass** die Wegeventile (13, 14) mechanisch betätigbar sind, und dass zur Betätigung der Wegeventile (13, 14) wenigstens eine mechanische Abgreifvorrichtung (15) entweder für die relative Drehbewegung der Solarrinne (G) um die Drehachse (2) und/oder für die relative Schwenkbewegung jedes Hydrozylinders (Z1, Z2) in der Anlenkung (6, 7) und/oder dem Widerlager (9) und/oder für den Zylinder-Hubweg vorgesehen ist.

2. Solarrinne nach Anspruch 1, **dadurch gekennzeichnet, dass** die Steuerung (S) wenigstens einen von der Pumpe (24) aufladbaren Druckspeicher (37) zumindest zur Druckmittelversorgung bei Ausführung des Notfallschritts nach Osten aufweist, und dass der Notfallschritt ohne Einsatz eines elektrischen Schaltglieds über die Ventile (39, 40, 47) und die mechanisch betätigten Wegeventile 13, 14 automatisch mechanisch steuerbar ist.

3. Solarrinne nach Anspruch 1, **dadurch gekennzeichnet, dass** die mechanisch betätigbaren Wegeventile (13, 14) 4/2-Wegeventile mit einem über die Abgreifvorrichtung (15) betätigbaren Umstellstößel (22) oder -hebel sind.

4. Solarrinne nach Anspruch 3, **dadurch gekennzeichnet, dass** jedes 4/2-Wegeventil als Schieberventil mit positiver Überdeckung zwischen beiden Schaltstellungen ausgebildet ist.

5. Solarrinne nach Anspruch 1, **dadurch gekennzeichnet, dass** die Abgreifvorrichtung (15) zum Generieren eines Betätigungshubs des Wegeventils (13, 14) die Drehbewegung der Nabe (5) relativ zu einem stationären Teil (11) eines Antriebspylonen (10) abgreift.

6. Solarrinne nach Anspruch 1, **dadurch gekennzeichnet, dass** die Abgreifvorrichtung (15) zum Generieren eines Betätigungshubs des Wegeventils (13, 14) die Schwenkbewegung der Kolbenstange (8) des Hydraulikzylinders (Z1, Z2) relativ zur Anlenkung (6, 7) an der Nabe (5) abgreift.

7. Solarrinne nach Anspruch 1, **dadurch gekennzeichnet, dass** die Abgreifvorrichtung (15) zum Generieren eines Betätigungshubs des Wegeventils (13, 14) die Schwenkbewegung des Hydraulikzylinders (Z1, Z2) relativ zur Abstützung (9) in einem Antriebspylonen (10) abgreift.

8. Solarrinne nach Anspruch 1, **dadurch gekennzeichnet, dass** die Abgreifvorrichtung (15) für jedes Wegeventil (13, 14) oder gemeinsam für beide Wegeventile (13, 14) vorgesehen ist.

9. Solarrinne nach Anspruch 3, **dadurch gekennzeichnet dass** die Abgreifvorrichtung (15) wenigstens eine Nockenfläche (21a, 21 b) mit wenigstens einem Nockenübergang (N) aufweist, und dass der Umstellstößel (22) oder -hebel das Wegeventils (13, 14) an der Nockenfläche (21a, 21b) anliegt, vorzugsweise unter Federkraft (52) und mit einer drehbaren Rolle (51).

10. Solarrinne nach Anspruch 1, **dadurch gekennzeichnet, dass** die mechanisch betätigbaren Wegeventile (13, 14) an den Hydraulikzylindern (Z1, Z2) angeordnet sind.

11. Solarrinne nach Anspruch 2, **dadurch gekennzeichnet, dass** in einer von der Pumpe (24) gespeisten Druckleitung (34, 34b) ein 2/2-Wege-Magnetsitzventil (40) stromauf eines 4/2-Wege-Magnetventils (47) zur Solarrinnen-Verstellrichtungswahl angeordnet ist, dass das 2/2-Wege-Magnetsitzventil (40) bestromt eine Sperrstellung und stromlos eine gedrosselte Durchgangsstellung einnimmt, und dass das 4/2-Wege-Magnetventil (47) unbestromt eine Schaltstellung entsprechend einer Solarrinnenverstellung nach Osten einnimmt.

12. Solarrinne nach Anspruch 11, **dadurch gekennzeichnet, dass** in der Druckleitung (34, 34a) parallel zum 2/2-Wege-Magnetsitzventil (40) ein 2/2-Wege-Magnetsitzventil (39) angeordnet ist, das bestromt eine Sperrstellung und stromlos eine im Wesentlichen ungedrosselte Durchgangsstellung einnimmt, und, vorzugsweise, eine Druckvorsteuerung (42) in Schaltrichtung zur Sperrstellung aufweist.

13. Solarrinne nach Anspruch 11, **dadurch gekennzeichnet, dass** die Steuerung (S) zumindest zum Ausführen der Nachführschritte und eines Notfallschritts bei ausgeschalteter Pumpe (24) aus dem Druckspeicher (37) und jeweils über das unbestromte 2/2-Wege-Magnetsitzventil (40) und zum Ein- und Ausschalten der Pumpe (24) zumindest während Druckspeicher-Ladebetriebs mit einem Schaltrelais ausgebildet ist.

14. Solarrinne nach den Ansprüchen 11 und 12, **dadurch gekennzeichnet, dass** die Steuerung (S) mit einem Schaltrelais zum Ausführen zumindest der Nachführschritte und zum Aufladen des Druckspeichers (37) durch Ein- und Ausschalten der Pumpe (24) ausgebildet ist.

15. Solarrinne nach Anspruch 11, **dadurch gekennzeichnet, dass** in der Druckleitung (34, 34b) ein in Strömungsrichtung zur Pumpe (24) sperrendes Rückschlagventil (35) angeordnet ist.

16. Solarrinne nach Anspruch 11, **dadurch gekennzeichnet, dass** ausgangs des 2/2-Wege-Magnetsitzventils (40) entweder eine Blende (45) oder ein Zweiwegestromregelventil (45') angeordnet ist.

## Claims

1. Solar trough collector (G) comprising a electrohydraulic adjustment device (V) and a control device (S), wherein the solar trough collector (G) is attached to a hub (5) rotatable about a rotation axis (2) to which hub two double actuated hydraulic cylinders (Z1, Z2) are linked at linkage locations with mutual offset, which hydraulic cylinders are pivotably supported at at least a stationary retainer (9) and can be controlled in the respective direction via a respective multi-way valve (13, 14), the control device containing as a pressure source an electromotoric drivable pump (24) and valves (39, 40, 47) which can be switched at least counter to spring force for stepwise adjustment of the solar trough collector (G) to the west for tracking the position of the sun, for an emergency step to the east in case of a current breakdown or current switch-off, for transferring the solar trough collector from an evening position to a morning position, as well as for a continuous adjustment of at least one predetermined wind protection and/or stow position, **characterised in that** the multi-way valves (13, 14) are actuable mechanically, and that for actuating the multi-way valves (13, 14) at least one mechanic detecting device (15) is provided either for detecting the relative rotational movement of the solar trough collector (G) about the rotation axis and/or for the relative pivot motion of each hydraulic cylinder (Z1, Z2) in the linkage location (6, 7) and/or at the retainer (9) and/or for the stroke of the hydraulic cylinder, respectively.

2. Solar trough collector according to claim 1, **characterised in that** the control device (S) comprises at least one pressure accumulator (37) to be loaded by the pump (24) at least for supplying pressure medium during execution of an emergency step to the east, and that the emergency step can be controlled automatically mechanically without using an electric switching member via the valves (39, 40, 47) and the mechanically actuated multi-way valves (13, 14).

3. Solar trough collector according to claim 1, **characterised in that** the mechanically actuated multi-way valves (13, 14) are 4/2 multi-way valves comprising an adjustment plunger (22) or adjustment lever actuable via the detecting device (15).

4. Solar trough collector according to claim 3, **characterised in that** each 4/2 multi-way valve is a slider valve having a positive overlap between both switching positions.

5. Solar trough collector according to claim 1, **characterised in that** the detecting device (15) detects the rotational movement of the hub relative to a stationary part (11) of a drive pylon (10) for generating an actuating stroke of the multi-way valve (13, 14).

6. Solar trough collector according to claim 1, **characterised in that** the detecting device (15) detects the pivot movement of a piston rod (8) of the hydrocylinder (Z1, Z2) relative to the linkage location (6, 7) at the hub (5) for generating an actuating stroke of the multi-way valve (13, 14).

7. Solar trough collector according to claim 1, **characterised in that** the detecting device (15) detects the pivot movement of the hydrocylinder (Z1, Z2) relative to a support (9) in a drive pylon (10) for generating an actuating stroke of the multi-way valve (13, 14).

8. Solar trough collector according to claim 1, **characterised in that** the detecting device (15) is arranged for each multi-way valve (13, 14) or is commonly shared by both multi-way valves (13, 14).

9. Solar trough collector according to claim 3, **characterised in that** the detecting device (15) comprises at least one cam surface (21 a, 21 b) having at least one cam transition (N), and that the adjustment plunger (22) or adjustment lever of the multi-way valve (13, 14) abuts at the cam surface (21a, 21b), preferably, by means of spring force (52) and with a rotatable cam follower roller (51).

10. Solar trough collector according to claim 1, **characterised in that** the mechanically actuated multi-way valves (13, 14) are arranged at the hydraulic cylinders (Z1, Z2).

11. Solar trough collector according to claim 2, **characterised in that** a 2/2 multi-way solenoid seat valve (40) is arranged in a pressure line (34, 34b) supplied by the pump (24) and upstream of a 4/2 multi-way solenoid seat valve (47) provided for selecting the adjustment direction of the solar trough collector, that the 2/2 multi-way solenoid seat valve (40) when supplied with current achieves a blocking position and without current achieves a throttled through flow position, and that the 4/2 multi-way solenoid valve (47) without current achieves a switching position corresponding with an adjustment of the solar trough collector to the east.

12. Solar trough collector according to claim 11, **characterised in that** a 2/2 multi-way solenoid seat valve (39) is arranged in the pressure line (34, 34a) parallel to the 2/2 multi-way solenoid seat valve (40), which 2/2 multi-way solenoid seat valve (39) achieves a blocking position when supplied with current and achieves a substantially non-throttling through flow position without current, and, preferably, has a pressure pilot control (42) acting in switching direction towards the blocking position.

13. Solar trough collector according to claim 11, **characterised in that** the control device (S) is designed at least for executing the tracking steps and an emergency step via the pressure accumulator (37) in case that the pump (24) is switched off and respectively by the 2/2 multi-way solenoid seat valve (40) in non-current condition, and has a switching relay for switching pump (24) on and off at least during an operation of loading the pressure accumulator (37).

14. Solar trough collector according to claims 11 and 12, **characterised in that** the control device (S) is designed with a switching relay for executing at least the tracking steps and for loading the pressure accumulator (37) by switching the pump (24) on and off.

15. Solar trough collector according claim 11, **characterised in that** a check valve (35) is arranged in the pressure line (34, 34b) which check valve (35) blocks in flow direction towards to the pump (24).

16. Solar trough collector according claim 11, **characterised in that** either an aperture (45) or a 2-way flow regulating valve (45') is arranged downstream of an exit of the 2/2 multi-way solenoid seat valve (40).

## Revendications

1. Collecteur solaire cylindro-parabolique (G) avec un dispositif de réglage électro-hydraulique (V) et une commande (S), dans lequel le collecteur solaire (G) est monté sur un moyeu (5) tournant autour d'un axe de rotation (2), sur lequel sont accouplés deux vérins hydrauliques à double effet (Z1, Z2) décalés mutuellement, montés de manière pivotante sur au moins une butée stationnaire (9), et dont le sens de fonctionnement peut être commandé pour chacun par une vanne de distribution (13, 14), dans lequel la commande (S) comporte une pompe (24) entraînée par un moteur électrique comme source de pression et au moins des vannes à contre-action par ressort (39, 40, 47) pour déplacer graduellement le collecteur solaire (G) vers l'ouest de manière à suivre la course du soleil, pour le déplacer vers l'est lors d'une étape d'urgence en cas de coupure ou de panne de courant, pour le transférer d'une position du soir à une position du matin, ainsi que pour l'établissement à tout moment d'au moins une position prédéterminée de protection du vent et/ou de stockage, **caractérisé en ce que** les vannes de distribution (13, 14) peuvent être actionnées mécaniquement, et **en ce qu'**au moins un dispositif de détection mécanique (15) est prévu pour l'actionnement des vannes de distribution (13, 14) pour le mouvement de rotation relatif du collecteur solaire (G) autour de l'axe de rotation (2), et/ou pour le mouvement de pivotement relatif de chaque vérin hydraulique (Z1, Z2) dans l'articulation (6, 7) et/ou la butée (9), et/ou pour la course du vérin.

2. Collecteur solaire cylindro-parabolique selon la revendication 1, **caractérisé en ce que** la commande (S) comporte au moins un accumulateur de pression (37) chargeable par la pompe (24) au moins pour l'alimentation en fluide sous pression lors de la mise en oeuvre de l'étape d'urgence vers l'est, et **en ce que** l'étape d'urgence peut être commandée mécaniquement de manière automatique sans nécessiter un élément de commutation électrique au moyen des vannes (39, 40, 47) et des vannes de distribution à actionnement mécanique (13, 14).

3. Collecteur solaire cylindro-parabolique selon la revendication 1, **caractérisé en ce que** les vannes de distribution à actionnement mécanique (13, 14) sont des vannes de distribution 4/2 avec un poussoir ou un levier de commutation (22) actionnable par le dispositif de détection (15).

4. Collecteur solaire cylindro-parabolique selon la revendication 3, **caractérisé en ce que** chaque vanne de distribution 4/2 est constituée sous forme d'une vanne à tiroir à recouvrement positif entre les deux positions de commutation.

5. Collecteur solaire cylindro-parabolique selon la revendication 1, **caractérisé en ce que** le dispositif de détection (15) détecte le mouvement de rotation du moyeu (5) par rapport à un élément stationnaire (11) d'un pylône d'entraînement (10) pour générer une course d'actionnement de la vanne de distribution (13, 14).

6. Collecteur solaire cylindro-parabolique selon la revendication 1, **caractérisé en ce que** le dispositif de détection (15) détecte le mouvement de pivotement de la tige du piston (8) du vérin hydraulique (Z1, Z2) par rapport à l'articulation (6, 7) sur le moyeu (5) pour générer une course d'actionnement de la vanne de distribution (13, 14).

7. Collecteur solaire cylindro-parabolique selon la revendication 1, **caractérisé en ce que** le dispositif de détection (15) détecte le mouvement de pivotement du vérin hydraulique (Z1, Z2) par rapport au support (9) dans un pylône d'entraînement (10) pour générer une course d'actionnement de la vanne de distribution (13, 14) .

8. Collecteur solaire cylindro-parabolique selon la revendication 1, **caractérisé en ce qu'**un dispositif de détection (15) est pourvu pour chaque vanne de distribution (13, 14) ou en commun pour les deux vannes de distribution (13, 14).

9. Collecteur solaire cylindro-parabolique selon la revendication 3, **caractérisé en ce que** le dispositif de détection (15) comporte au moins une surface de came (21a, 21b) avec au moins une transition de came (N), et **en ce que** le poussoir ou levier de commutation (22) est en contact avec la vanne de distribution (13, 14) sur la surface de came (21a, 21b), préférablement sous la pression d'un ressort (52) et avec un galet rotatif (51).

10. Collecteur solaire cylindro-parabolique selon la revendication 1, **caractérisé en ce que** les vannes de distribution à actionnement mécanique (13, 14) sont agencées sur les vérins hydrauliques (Z1, Z2).

11. Collecteur solaire cylindro-parabolique selon la revendication 2, **caractérisé en ce qu'**une électrovanne de distribution 2/2 (40) est agencée en amont d'une électrovanne de distribution 4/2 (47) sur une conduite sous pression (34, 34b) alimentée par la pompe (24) pour le choix de la direction de réglage du collecteur, **en ce que** l'électrovanne de distribution 2/2 (40) adopte une position fermée lorsqu'elle est sous tension et une position ouverte étranglée lorsqu'elle est hors tension, et **en ce que** l'électrovanne de distribution 4/2 (47) adopte une position de commutation correspondant à un déplacement du collecteur solaire vers l'est lorsqu'elle est hors tension.

12. Collecteur solaire cylindro-parabolique selon la revendication 11, **caractérisé en ce qu'**une électrovanne de distribution 2/2 (39) est agencée dans la conduite sous pression (34, 34a) parallèlement à l'électrovanne de distribution 2/2 (40), adopte une position fermée lorsqu'elle est sous tension et une position ouverte essentiellement non étranglée lorsqu'elle est hors tension, et comporte préférablement un asservissement en boucle ouverte de la pression (42) en direction de commutation pour la position fermée.

13. Collecteur solaire cylindro-parabolique selon la revendication 11, **caractérisé en ce que** la commande (S) est équipée d'un relais de commutation au moins pour la mise en oeuvre de l'étape de suivi et d'une étape d'urgence lorsque la pompe (24) est à l'arrêt à partir de l'accumulateur de pression (37) et toujours via l'électrovanne de distribution 2/2 (40) hors tension, et pour la mise en marche et à l'arrêt de la pompe (24) au moins durant le chargement de l'accumulateur de pression.

14. Collecteur solaire cylindro-parabolique selon les revendications 11 et 12, **caractérisé en ce que** la commande (S) est constituée avec un relais de commutation pour mettre en oeuvre au moins l'étape de suivi et pour décharger l'accumulateur de pression (37) par la mise en marche et à l'arrêt de la pompe (24).

15. Collecteur solaire cylindro-parabolique selon la revendication 11, **caractérisé en ce qu'**un clapet anti-retour de blocage (35) est agencé dans la conduite sous pression (34, 34b) dans la direction du débit de la pompe (24).

16. Collecteur solaire cylindro-parabolique selon la revendication 11, **caractérisé en ce que** qu'un diaphragme (45) ou une vanne de régulation de débit à deux voies (45') est agencé à la sortie de l'électrovanne de distribution 2/2 (40).
